# EUROPEAN PATENT APPLICATION

(11) **EP 3 147 599 A1**
(43) Date of publication of application: **29.03.2017**
(21) Application number: 16189859.8
(22) Date of filing: 21.09.2016
(51) Int. Cl.: F25D 3/10, F25B 19/00

(54) **REFRIGERATION APPARATUS**

(30) Priority: 25.09.2015 GB 201516980
(71) Applicant: Linde AG, 80331 München (DE)
(72) Inventor: ALLWOOD, Michael, Rotherham, South Yorkshire S66 3RR (GB)

(57) **Abstract**

A refrigeration apparatus having liquefied gas storage means with a headspace when liquefied gas is present. A conduit extends between the headspace of the storage means adjacent to a heat exchanger. The conduit is configured to feed gas from the headspace to the heat exchanger. A second conduit extends from the heat exchanger, and is configured to feed the gas from the heat exchanger to an exhaust by which the gas is vented to the atmosphere.

## Description

### Field

The present invention relates to a refrigeration apparatus. More specifically, the present invention relates to a refrigeration apparatus which uses a liquefied gas, such as liquid nitrogen (LIN), as the refrigerant, and to a method of replenishing the refrigerant.

### Background

Traditionally, the majority of the world's chilled and frozen food was transported overland in refrigerated trucks and/or trailers. The trucks and trailers were refrigerated using mechanical refrigeration units which typically used diesel to fuel a compressor which circulated a refrigerant. However, this was problematic because the diesel combustion created air pollution and carbon dioxide emissions. Additionally, the mechanical refrigeration units created noise levels of 80 decibels and above, and refrigerant leakage, which could reach levels of between 15 and 35%, led to additional pollution and costs.

Accordingly, a cryogenic replacement for the mechanical, diesel-powered truck refrigeration systems was introduced. These cryogenic replacements, such as FROSTCRUISE™, provide an eco-friendly solution for the transportation of perishable chilled and frozen food, based on the use of liquid nitrogen (LIN) as the refrigerant. LIN, which is liquid at a temperature of -196°C, is stored in an insulated on-board storage tank. In order to use its cooling energy, LIN is piped from the storage tank through a heat exchanger with a large surface area, and the LIN evaporates as high-velocity fans circulate the chilled air in the truck's compartment, thereby keeping the perishable goods chilled.

However, a number of problems are encountered when filling the vehicle's on-board storage tank with LIN. For instance, as the fill activity displaces the cold gas within the on-board tank with liquid nitrogen, the cold gas escapes directly to the atmosphere. As the cold compressed nitrogen gas vents to atmosphere, it expands thereby creating a high decibel noise, which requires workers in the immediate vicinity of the truck to wear hearing protection, such as ear defenders. Additionally, venting of the cold nitrogen gas to the atmosphere can create a dense white vapour cloud adjacent to the vehicle that can drastically reduce visibility and potentially lead to safety issues in busy and congested vehicle filling areas. In addition, the cold nitrogen gas which is vented is traditionally directed towards the ground. This can cause problems, particularly in wet conditions, as the floor quickly freezes, thereby creating a dangerous slip hazard. Additionally, over time, this high pressure low temperature treatment can damage the floor surface.

The present invention arises from the inventor's work in trying to overcome the problems associated with the prior art.

### Summary

In accordance with a first aspect of the invention, there is provided a refrigeration apparatus comprising liquefied gas storage means comprising a headspace when liquefied gas is present therein; a first conduit extending between the headspace of the storage means and at least adjacent to a heat exchanger, wherein the first conduit is configured to feed gas from the headspace to the heat exchanger; and a second conduit extending from the heat exchanger, and configured to feed the gas from the heat exchanger to an exhaust by which the gas is vented to the atmosphere.

Advantageously, and preferably, the liquefied gas in the storage means can be replenished during a filling mode in which the storage means is in fluid communication with a separate liquefied gas supply. Additionally, the temperature of the gas from the headspace is raised prior to venting which prevents the gas from forming a vapour cloud, which could otherwise compromise visibility. Furthermore, since the temperature of the gas from the headspace is raised prior to venting, the gas does not expand rapidly as it is vented, reducing the noise caused by venting, and will be less likely to cause surrounding areas to freeze.

The liquefied gas (*i.e*. the refrigerant) may comprise liquid carbon dioxide, liquid argon, liquid air or liquid nitrogen. Preferably, the liquefied gas comprises liquid nitrogen (LIN).

Preferably, the first conduit comprises a valve. Preferably, when the apparatus is in a filling mode, the storage means is in fluid communication with the liquefied gas supply, and the valve is open causing the storage means to be fluidly connected to the heat exchanger. When the apparatus is not in the filling mode, the valve is preferably configured to prevent flow of gas along the first conduit. The valve preferably comprises a two-port valve. The valve preferably comprises a one-way valve. Preferably, the valve comprises a manual valve or a solenoid valve.

Preferably, in embodiments where the valve comprises a solenoid valve, the apparatus comprises control means configured to send a signal to open the valve when the apparatus is switched to a fill mode.

The apparatus preferably comprises a compartment in which the heat exchanger is disposed. Cargo requiring refrigeration may be contained within the compartment. Preferably, the apparatus comprises one or more fan configured to circulate air within the compartment. Preferably, the control means is configured to cause the fan to circulate air in the compartment, more preferably when the apparatus is in the fill mode. Advantageously, the transfer of heat from the air in the compartment to the gas in the heat exchanger is more efficient due to the one or more fan circulating the air. Additionally, the flow of cold gas through the heat exchanger pre-cools the compartment.

Preferably, the apparatus comprises a refrigeration mode, wherein the apparatus is configured to maintain the temperature of the air in the compartment within a desired temperature range. Preferably, the apparatus comprises a temperature sensor configured to detect the temperature of the air in the compartment.

Preferably, the apparatus comprises a third conduit configured to feed liquefied gas from the storage means to the heat exchanger. Preferably, the third conduit comprises a second valve. When the apparatus is in the filling mode, the second valve is preferably closed, and thereby configured to prevent flow of the liquefied gas along the third conduit. The second valve preferably comprises a two-port valve. The second valve preferably comprises a one-way valve. Preferably, the second valve comprises a solenoid valve.

Preferably, when the apparatus is in the refrigeration mode, the control means is configured to monitor the temperature detected by the temperature sensor. Preferably, the control means is configured to send a signal (which is preferably a digital signal) to open the second valve when the temperature sensor detects a temperature above a predetermined maximum temperature. Preferably, the control means is configured to send a signal to close the second valve when the first temperature sensor detects a temperature below a predetermined minimum temperature. The predetermined maximum temperature and/or the predetermined minimum temperature may be defined by a user.

Advantageously, the temperature within the compartment may be maintained within an acceptable range. Additionally, the same heat exchanger is used during filling and refrigeration modes, and so the apparatus may be relatively compact.

Preferably, when the apparatus is in the refrigeration mode, the control means is configured to cause the one or more fan to circulate air within the compartment. Advantageously, the temperature of the air is roughly consistent throughout the compartment.

Preferably, the apparatus comprises a flow regulating means operably connected to the second conduit, and configured to regulate the flow of gas therealong. Preferably, the flow regulating means comprises a third valve. The third valve preferably comprises a two-port valve. The third valve preferably comprises a one-way valve. Preferably, the third valve comprises a flow control valve.

Preferably, the control means is configured to send a signal to the flow regulating means, thereby causing it to open fully, when the apparatus is switched to filling mode.

Preferably, the apparatus comprises a second temperature sensor configured to detect the temperature within the second conduit. Advantageously, the second temperature sensor is configured to detect the temperature of a fluid downstream of the heat exchanger. The second temperature sensor may be configured to detect the temperature upstream or downstream of the flow regulating means. Preferably, the control means is configured to monitor the temperature detected by the second temperature sensor when the apparatus is in the refrigeration mode. Preferably, when the second temperature sensor detects a temperature above a maximum predetermined temperature, the control means is configured to send a signal to the flow regulating means to increase the flow of the fluid along the second conduit. Preferably, when the second temperature sensor detects a temperature below a minimum predetermined temperature, the control means is configured to send a signal to the flow regulating means to decrease the flow of the fluid along the second conduit. It should be appreciated that any signals described herein are preferably digital signals.

Advantageously, by controlling the flow along the second conduit, the apparatus ensures that gas, as opposed to liquefied gas, is vented to the atmosphere. Additionally, by ensuring that the temperature of the gas is raised above a minimum predetermined threshold, this ensures that apparatus functions much more efficiently, and the temperature of the compartment can be maintained using less liquefied gas.

Preferably, the exhaust comprises a muffler or silencer through which the venting gas flows. Advantageously, the muffler or silencer is configured to reduce noise caused by gas venting to the atmosphere.

Preferably, the apparatus comprises liquefied gas filling means connectable to a liquefied gas supply. Preferably, the liquefied gas filling means comprises an attachment means configured to be reversibly attachable to a hose for feeding liquefied gas from the liquefied gas supply to the filling means. Preferably, the filling means comprises a fourth conduit configured to feed liquefied gas from the attachment means to the storage means. Preferably, the fourth conduit comprises a fourth valve. When the apparatus is in the filling mode, the fourth valve is preferably configured to allow flow of gas along the fourth conduit. When the apparatus is not in the filling mode, the fourth valve is preferably configured to prevent flow of the liquefied gas along the fourth conduit. The fourth valve preferably comprises a two-port valve. The fourth valve preferably comprises a one way valve. Preferably, the fourth valve comprises a manual valve or a solenoid valve.

Preferably, in embodiments where the fourth valve comprises a solenoid valve, the control means is configured to send a signal to open the fourth valve when the apparatus is switched to a fill mode.

According to a second aspect of the present invention, there is provided a vehicle comprising the refrigeration system according to the first aspect.

The vehicle may be, for example, a railway carriage, truck, semi-trailer, car, van, lorry, aircraft, boat or ship. The vehicle is preferably a truck.

The inventors believe that the method of filling the storage means is novel.

Hence, in accordance with a third aspect, there is provided a method of introducing a liquefied gas to a refrigeration apparatus, the method comprising:
- connecting the refrigeration apparatus to a liquefied gas supply;
- feeding liquefied gas from the liquefied gas supply into a storage means disposed in the refrigeration apparatus;
- feeding a gas from a headspace in the storage means through a heat exchanger; and
- venting the gas to the atmosphere.

The method of the third aspect preferably comprises the use of the apparatus of the first aspect.

The liquefied gas may comprise liquid carbon dioxide, liquid argon, liquid air or liquid nitrogen. Preferably, the liquefied gas comprises liquid nitrogen.

Preferably, the method comprises opening a first valve, and thereby fluidly connecting the headspace and the heat exchanger. Preferably, the first valve is disposed in a conduit which extends between the headspace and at least adjacent to the heat exchanger. The step of opening the first valve may comprise manually opening the first valve. Alternatively, the step of opening the first valve may comprise sending a signal (which is preferably a digital signal) to the first valve and thereby opening the first valve.

Preferably, the method comprises cooling a compartment, wherein the heat exchanger is disposed within the compartment. Preferably, the step of cooling the compartment comprises circulating air within the compartment while the gas is fed through the heat exchanger.

The method may comprise fully opening a flow regulating means, and thereby reducing any restriction to the flow of the gas from the heat exchanger. Preferably, the step of fully opening the flow regulating means comprises sending a signal (which is preferably a digital signal) to fully open the flow regulating means.

The method may comprise detecting the temperature of the gas subsequent to the step of feeding the gas through the heat exchanger, and prior to the step of venting the gas to the atmosphere. The method may comprise restricting the flow of the gas from the heat exchanger when the temperature of the gas falls below a predetermined minimum temperature. The step of restricting the flow of the gas may comprise partially closing flow regulating means. Preferably, the step of partially closing the flow regulating means comprises sending a signal (which is preferably a digital signal) to partially close the flow regulating means.

The method may comprise detecting the temperature of the gas subsequent to the step of feeding the gas through the heat exchanger, and prior to the step of venting the gas to the atmosphere. The method may comprise increasing the flow of the gas from the heat exchanger when the temperature of the gas rises above a predetermined maximum temperature. The step of increasing the flow of the gas may comprise partially or fully opening flow regulating means. Preferably, the step of partially or fully opening the flow regulating means comprises sending a signal (which is preferably a digital signal) to partially or fully open the flow regulating means.

Advantageously, the temperature of the gas will fall within acceptable limits when it is vented to the atmosphere.

Preferably, the step of venting the gas comprises passing the gas through a muffler or silencer.

Preferably, the method comprises opening a further valve, and thereby fluidly connecting the liquefied gas supply and the storage means. The step of opening the further valve may comprises manually opening the further valve. Alternatively, the step of opening the further valve may comprise sending a signal (which is preferably a digital signal) to open the further valve.

All features described herein (including any accompanying claims, abstract and drawings), and/or all of the steps of any method or process so disclosed, may be combined with any of the above aspects in any combination, except combinations where at least some of such features and/or steps are mutually exclusive.

### Brief Description of the Figures

Embodiments of the present invention will now be described, by way of example only, with reference to the accompanying drawings, in which:
**Figure 1** is a schematic representation of a cryogenic refrigeration truck located at a liquid nitrogen (LIN) filling station;
**Figure 2** is a schematic diagram showing a prior art apparatus by which refrigerant (e.g. liquid nitrogen) is replenished in a cryogenic refrigeration truck; and
**Figure 3** is a schematic diagram showing one embodiment of the apparatus of the invention for replenishing refrigerant in a cryogenic refrigeration truck.

### Detailed Description

### Example 1 - Prior art apparatus

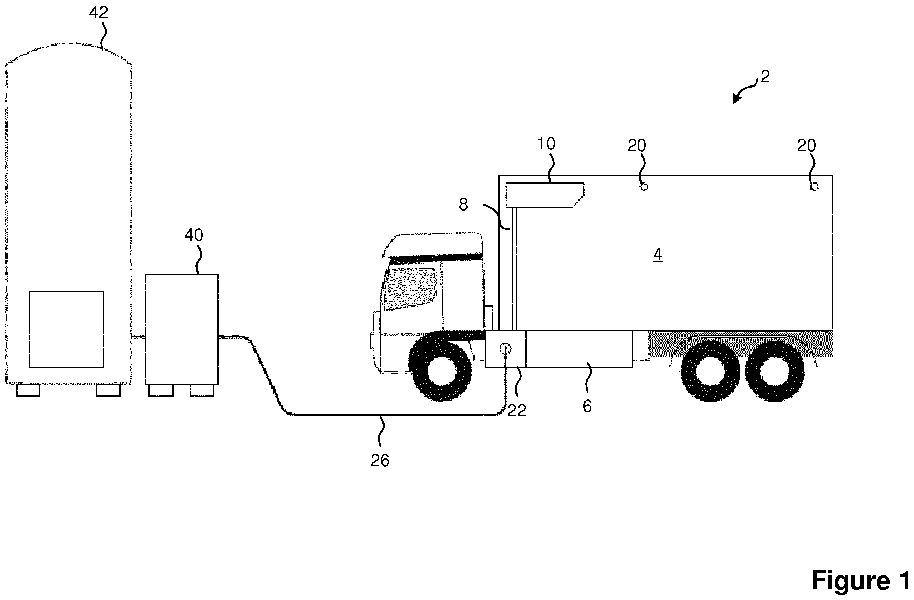

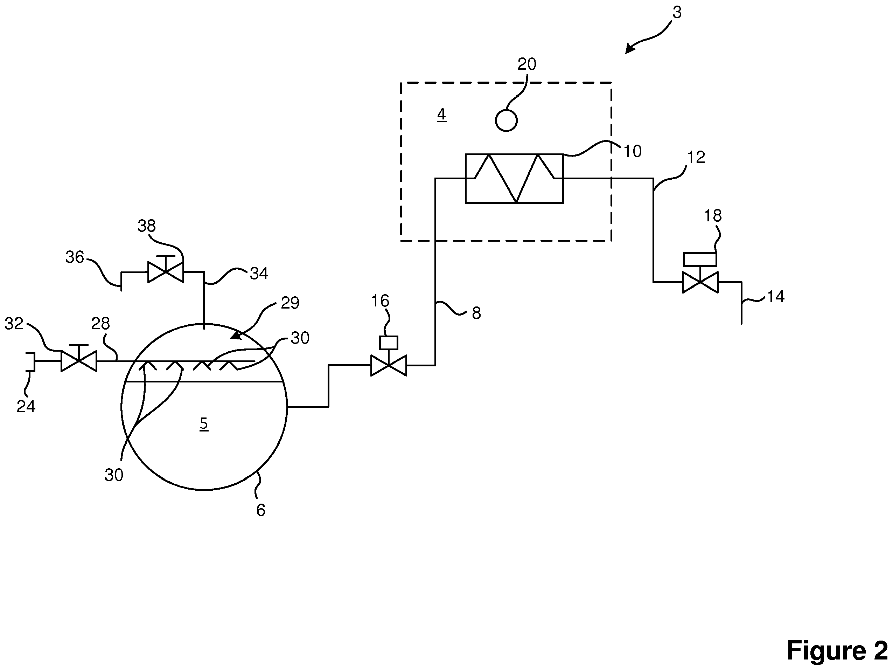

Referring to Figure 1, there is shown a cryogenic refrigerated truck 2 for transporting perishable goods, such as chilled and frozen food. The rear of the truck 2 has a compartment 4 in which the perishable goods are stored, and a refrigeration apparatus 3 shown in more detail in Figure 2, which is configured to keep the goods chilled.

A liquid nitrogen (LIN) tank 6 for storing liquid nitrogen (LIN) 5 therein is disposed adjacent to the rear compartment 4. A conduit 8 extends between the LIN tank 6 and a heat exchanger 10 which is disposed inside and towards the top of the compartment 4. As shown in Figure 2, a two-port solenoid valve 16 is disposed in the conduit 8 and controls the flow of LIN therealong to the heat exchanger 10.

A further conduit 12 extends from the heat exchanger 10 leading to an exhaust 14, which extends out of the truck's rear container 4, and a flow control valve 18 is disposed in the conduit 12 for controlling the flow of vented gas therethrough and out of the truck 2. Additionally, temperature sensors 20 are disposed throughout the compartment 4, as shown in Figure 1 and 2. A control system (not shown) is used to control various components of the apparatus 3, which will be described below.

When the truck 2 is being used to transport goods within the compartment 4, fans (not shown) circulate the chilled air within the compartment 4 so that the temperature is roughly consistent throughout the compartment 4. The temperature sensors 20 detect the temperature within the compartment and this information is relayed to the control system. When the temperature sensors 20 detect a temperature above a predetermined maximum temperature, the control system opens valve 16. Due to the pressure within the LIN tank 6, LIN 5 flows along conduit 8 and through the heat exchanger 10. Heat is transferred from the air in the compartment 4 to the LIN 5 passing through the heat exchanger 10, causing the LIN 5 to evaporate therein. The resultant nitrogen gas created in the heat exchanger 10 then flows along conduit 12 and out through the exhaust 14, so that is vented to the atmosphere.

Valve 18 controls the rate of flow of the nitrogen gas along the conduit 12. When a further temperature sensor (not shown) disposed in the exhaust 14 detects that the temperature of the exhaust nitrogen has fallen below a first predetermined minimum temperature (*i.e*. a set-point), the control system causes valve 18 to partially close, thereby decreasing the rate of flow of exhaust nitrogen along conduit 12. Similarly, if the temperature sensor in the exhaust 14 detects that the temperature has risen above a predetermined maximum temperature, valve 18 opens thereby increasing the flow along the conduit 12. This ensures that the apparatus 3 functions efficiently and does not waste LIN 5, while maintaining the temperature of the compartment 4 within the desired temperature range. If the further temperature sensor detects that the temperature of the exhaust nitrogen has fallen below a second predetermined minimum temperature (*i.e*. a set-point), which is lower than the first predetermined minimum temperature, then the control system causes valve 16 to close, thereby stopping the flow of nitrogen along the conduit 12. This protects the valve 18 against temperatures below the manufacturer's lower limit. Similarly, when the temperature sensors 20 in the compartment 4 detect a temperature below a predetermined minimum temperature, the control system closes valve 16 and thereby stops the flow of LIN 5 from the LIN tank 6 to the heat exchanger 10.

It is necessary to periodically refill the LIN tank 6 with LIN 5. Accordingly, a control and filling box 22 is provided adjacent to the LIN tank 6, as shown in Figure 1. Referring now to Figure 2, the control and filling box 22 comprises a hose attachment 24 configured to attach a LIN hose 26 thereto. A conduit 28 extends between the hose attachment 24 and headspace 29 of the LIN tank 6, and has a series of spaced apart outlets 30 disposed therealong within the headspace 29. A manual valve 32 is disposed in the conduit 28, by which the flow of LIN 5 from the hose attachment 24 to the headspace 29 in tank 6 is controlled. Nitrogen gas present in the headspace 29 is replaced by fresh LIN 5, and exits the LIN tank 6 via conduit 34 which leads to an exhaust 36, which extends out of the truck 2, and is directed towards the ground. A manual valve 38 is disposed on the conduit 34, by which the flow of displaced gas through exhaust 36 is controlled.

Referring to Figure 1, in order to fill the LIN tank 6 with fresh LIN 5, a user first parks the truck 2 adjacent to a LIN filling station 40, which is fluidly connected to an on-site LIN tank 42. The user then takes an LIN hose 26, which extends from the filling station 40, and connects it to the hose attachment 24 on the control and filling box 22. The user then manually opens valves 32, 38, which initiates the flow of LIN 5 from the filling station 40, thereby causing LIN 5 to flow along hose 26, and conduit 28, and through outlets 30 into the LIN tank 6. The LIN 5 flowing into the LIN tank 6 displaces nitrogen gas present in the headspace 29 of the LIN tank 6, which flows along conduit 34 and out of exhaust 36 directly into the atmosphere outside of the truck 2. Valve 16 remains closed as the LIN tank 6 is filled, thereby prevent LIN 5 from flowing out of the LIN tank 6 and through the heat exchanger 10.

Since the nitrogen gas within the headspace 29 has been stored adjacent to the LIN, it is cold (about -i95°C). Accordingly, as the gas vents through exhaust 36, it becomes warmer and expands, creating a high decibel noise and requiring the user, and anyone else in the vicinity, to wear ear defenders. Additionally, venting of the cold nitrogen gas creates a dense white vapour cloud that can drastically reduce visibility and potentially lead to safety issues in busy and congested vehicle filling areas. Finally, as mentioned above, exhaust 36 is directed towards the ground, and so when the floor is wet, the cold nitrogen gas can cause the water to freeze, thereby creating a slip hazard, and over time this high pressure and low temperature treatment can damage the ground surface.

### Example 2 - Apparatus in accordance with the invention

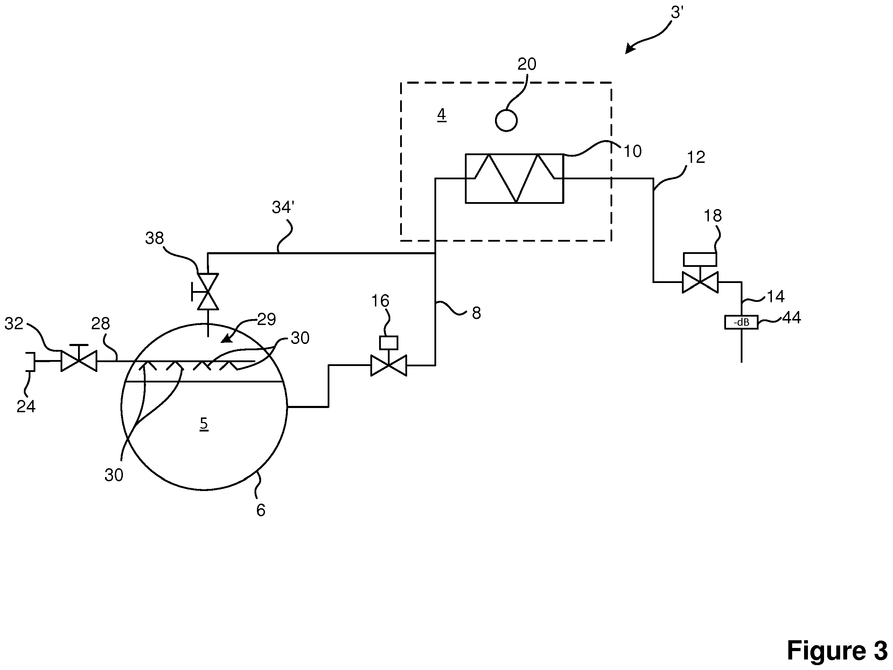

With reference now to Figure 3, an alternative refrigeration apparatus 3' has been devised, which can be incorporated into the refrigerated truck 2 shown in Figure 1.

Apparatus 3' comprises a compartment 4 in the rear of the truck 2 for storing perishable goods, and a liquid nitrogen (LIN) tank 6 disposed adjacent thereto. The apparatus 3' comprises a heat exchanger 10, an exhaust 14 and conduits 8, 12 configured to feed LIN 5 from the LIN tank 6 through heat exchanger 10, and out of the exhaust 14, in a controlled manner, to the atmosphere. The apparatus 3' also comprises temperature sensors 20, and fans (not shown) for distributing the chilled air throughout the rear compartment 4. As shown in Figure 3, the exhaust 14 is provided with a muffler or silencer 44, such as a dB™ vent silencer. The silencer 44 comprises a fine cylindrical mesh over a large surface area and works by dissipating the flow of gas through the mesh, thereby reducing the pressure differential of the escaping gas. When the truck 2 is being used to transport goods within the compartment 4, the temperature within the compartment 4 is kept within acceptable limits using the method described in Example 1.

The truck 2 is provided with a control and filling box 22 next to the LIN tank 6, and the control and filling box 22 comprises a hose attachment 24 and a conduit 28 provided with a valve 32, as described in Example 1. Extending out of the headspace of the LIN tank 6 there is provided a conduit 34', which is connected to conduit 8 at a point between valve 16 and the heat exchanger 10. A valve 38 is disposed on conduit 34'. While the valves 32, 38 shown in Figure 3 are manual valves, it will be appreciated that in an alternative embodiment solenoid valves could be used.

When it is necessary to refill the LIN tank 6 with LIN 5, a user parks the truck 2 adjacent to the LIN filling station 40, and connects the LIN hose 26 to the hose attachment 24 of the filling box 22. Once the LIN hose 26 is attached, the user sets the control system to a "fill mode", in which valve 16 is kept closed and the fans are operated to circulate the chilled air within the compartment 4. In embodiments where the valves 32, 38 are solenoid valves the control system sends a signal to the valves 32, 38, and thereby opens them, when it is set to fill mode. Alternatively, when the valves 32, 38 are manual valves, such as in the embodiment illustrated, the user manually opens the valves 32, 38.

The user then initiates the flow of LIN 5 from the filling station 40 along hose 26, and conduit 28, and out of the outlets 30 into the LIN tank 6. The LIN 5 flowing into the LIN tank 6 displaces nitrogen gas present in the headspace 29. Accordingly, the displaced nitrogen gas flows along conduit 34', and along conduit 8 into the heat exchanger 10. From here, the displaced nitrogen gas flows along conduit 12, and then out of the exhaust 14, through the silencer 44, to the atmosphere.

Accordingly, the vented nitrogen gas from the LIN tank 6 is transported through the heat exchanger 10 before it is vented to the atmosphere. Due to the fans circulating the air within the compartment 4, heat is transferred from the air in the compartment 4 to the nitrogen gas in the heat exchanger 10. Valve 18 may initially be held fully open, so it does not cause a build up of pressure as the LIN tank 6 is filled, but simply allows the vented nitrogen gas to flow through the refrigeration apparatus 3'. As the nitrogen gas flows out of the exhaust 14, it will be relatively warm, about 10°C below the compartment 4 temperature, due to the transfer of heat from the air within the compartment 4, and this means that the temperature of the nitrogen gas does not suddenly increase as it is vented from the exhaust 14 causing the nitrogen gas to expand significantly.

The further temperature sensor disposed in the exhaust 14 can detect if the temperature of the displaced nitrogen gas has fallen below a first predetermined minimum temperature. This predetermined minimum temperature may be set be a user. Alternatively, it can be set by the control system in relation to the compartment 4 temperature. If a temperature below the predetermined minimum temperature is detected, the control system causes valve 18 to partially close, thereby decreasing the rate of flow of exhaust nitrogen along conduit 12. Similarly, if the temperature sensor in the exhaust 14 detects that the temperature has risen above a predetermined maximum temperature, valve 18 opens thereby increasing the flow along the conduit 12. This ensures that the temperature of the displaced nitrogen gas is above a predetermined minimum temperature when it is vented into the atmosphere.

Accordingly, noise caused by the nitrogen gas venting through exhaust 14 of the apparatus 3' is significantly reduced. Additionally, the silencer 44 diffuses the nitrogen gas, and further reduces any noise which would otherwise have been caused by the venting of the nitrogen gas to the atmosphere.

### Summary

When the LIN tank 6 is refilled, cold nitrogen gas therein is displaced. This displaced nitrogen gas is passed through the heat exchanger 10 within compartment 4, thereby increasing the temperature of the nitrogen gas, before it is vented to the atmosphere. Additionally, the nitrogen gas is passed through a silencer 44. By passing the cold nitrogen gas through compartment 4, the temperature within the compartment 4 is lowered, and so the compartment 4 has effectively been pre-cooled. Thus, if a user intends to use the refrigerated truck 2 immediately after filling the LIN tank 6 with LIN 5, then it will take less time and use much less LIN 5 to cool the compartment 4 to the required refrigeration temperature. Additionally, by raising the temperature of the nitrogen gas in the heat exchanger 10 prior to venting, the vented nitrogen will not create a vapour cloud, which could otherwise compromise visibility adjacent to the truck 2. Additionally, the vented nitrogen gas is much less likely to cause a wet floor below the exhaust 14, which could freeze.

By venting the nitrogen gas through the silencer 44, the noise caused by the venting gas is less than 56 decibels. Accordingly, no hearing protection is required. Additionally, the silencer 44 reduces the pressure of the nitrogen gas and, as explained above, the nitrogen gas is relatively warm, and so venting of the gas does not damage the floor by the exhaust 44. Additionally, the embodiment of the apparatus 3' of the invention described in Example 2 uses some existing components of the prior art apparatus 3 described in Example 1. Accordingly, the apparatus 3' of the invention is easy to manufacture and fit, and existing prior art models can be modified or retro-fitted to incorporate the apparatus 3' of the invention described in Example 2. It will be appreciated that while the above embodiment has been described with reference to liquid nitrogen (LIN), other suitable liquefied gases could be used, such as liquid carbon dioxide, liquid argon or liquid air.

## Claims

1. A refrigeration apparatus comprising liquefied gas storage means comprising a headspace when liquefied gas is present therein; a first conduit extending between the headspace of the storage means and at least adjacent to a heat exchanger, wherein the first conduit is configured to feed gas from the headspace to the heat exchanger; and a second conduit extending from the heat exchanger, and configured to feed the gas from the heat exchanger to an exhaust by which the gas is vented to the atmosphere.

2. A refrigeration apparatus according to claim 1, wherein the liquefied gas comprises liquid carbon dioxide, liquid argon, liquid air or liquid nitrogen.

3. A refrigeration apparatus according to either claim 1 or claim 2, wherein the first conduit comprises a valve.

4. A refrigeration apparatus according to claim 3, wherein when the apparatus is in a filling mode, the storage means is in fluid communication with the liquefied gas supply, and the valve is open causing the storage means to be fluidly connected to the heat exchanger, and when the apparatus is not in the filling mode, the valve is configured to prevent flow of gas along the first conduit.

5. A refrigeration apparatus according to any preceding claim, wherein the apparatus comprises a compartment in which the heat exchanger is disposed.

6. A refrigeration apparatus according to claim 5, wherein the apparatus comprises a refrigeration mode, wherein the apparatus is configured to maintain the temperature of the air in the compartment within a desired temperature range.

7. A refrigeration apparatus according to claim 6, wherein the apparatus comprises a temperature sensor configured to detect the temperature of the air in the compartment.

8. A refrigeration apparatus according to either claim 6 or claim 7, wherein the apparatus comprises a third conduit configured to feed liquefied gas from the storage means to the heat exchanger.

9. A refrigeration apparatus according to claim 8, wherein the third conduit comprises a second valve and when the apparatus is in the filling mode the second valve is closed, and thereby configured to prevent flow of the liquefied gas along the third conduit.

10. A refrigeration apparatus according to any preceding claim, wherein the apparatus comprises a flow regulating means operably connected to the second conduit, and configured to regulate the flow of gas flowing therealong.

11. A refrigeration apparatus according to claim 10, wherein the apparatus comprises a control means configured to send a signal to the flow regulating means, thereby causing it to open fully, when the apparatus is switched to the filling mode.

12. A refrigeration apparatus according to any preceding claim, wherein the exhaust comprises a muffler or silencer through which the venting gas flows.

13. A refrigeration apparatus according to any preceding claim, wherein the apparatus comprises liquefied gas filling means connectable to a liquefied gas supply.

14. A refrigeration apparatus according to claim 13, wherein the liquefied gas filling means comprises an attachment means configured to be reversibly attachable to a hose for feeding liquefied gas from the liquefied gas supply to the filling means, and a fourth conduit configured to feed liquefied gas from the attachment means to the storage means, wherein the fourth conduit comprises a fourth valve.

15. A refrigeration apparatus according to claim 14, wherein when the apparatus is in the filling mode, the fourth valve is configured to allow flow of gas along the fourth conduit, and when the apparatus is not in the filling mode, the fourth valve is configured to prevent flow of the liquefied gas along the fourth conduit.

16. A vehicle comprising the refrigeration system according to any one of claims 1-15.

17. A vehicle according to claim 16, wherein the vehicle is a truck.

18. A method of introducing a liquefied gas to a refrigeration apparatus, the method comprising:
- connecting the refrigeration apparatus to a liquefied gas supply;
- feeding liquefied gas from the liquefied gas supply into a storage means disposed in the refrigeration apparatus;
- feeding a gas from a headspace in the storage means through a heat exchanger; and
- venting the gas to the atmosphere.

19. A method according to claim 18, wherein the method comprises opening a first valve, and thereby fluidly connecting the headspace and the heat exchanger.

20. A method according to either claim 18 or claim 19, wherein the method comprises cooling a compartment, wherein the heat exchanger is disposed within the compartment.

21. A method according to any one of claims 18 to 20, wherein the step of venting the gas comprises passing the gas through a muffler or silencer.

22. A method according to any one of claims 18 to 21, wherein the method comprises opening a further valve, and thereby fluidly connecting the liquefied gas supply and the storage means.
